# EUROPEAN PATENT SPECIFICATION

(11) **EP 2 127 923 B1**
(45) Date of publication and mention of the grant of the patent: **26.06.2013**
(21) Application number: 08702967.4
(22) Date of filing: 09.01.2008
(51) Int. Cl.: B60H 1/00

(54) **AIR CONDITIONER FOR VEHICLE**
KLIMAANLAGE FÜR EIN FAHRZEUG
CONDITIONNEUR D'AIR POUR VÉHICULE

(30) Priority: 28.02.2007 JP 2007050021
(43) Date of publication of application: 02.12.2009
(73) Proprietor: Mitsubishi Heavy Industries, Ltd., Tokyo 108-8215 (JP)
(72) Inventor: CHIKAGAWA, Noriyuki, Kiyosu-shi Aichi 452-8561 (JP); SAKAGUCHI, Asuka, Nagoya-shi Aichi 453-0862 (JP)
(74) Representative: Intès, Didier Gérard André
(86) International application number: PCT/JP2008/050095
(87) International publication number: WO 2008/105185

(56) References cited:
- JP-A- 7 172 144
- JP-A- 07 172 144
- JP-A- 2005 059 807
- US-A1- 2007 023 181
- US-B1- 6 368 207

## Description

### Technical Field

The present invention relates to an air-mixing type vehicle air conditioner including an air-mixing damper interposed between an evaporator and a heater core.

### Background Art

A large proportion of vehicle air conditioners employs an air mixing method for temperature control. An air-mixing type vehicle air conditioner includes a heater core disposed downstream of an evaporator provided in an air channel of a casing and a bypass channel for bypassing the heater core. The air-mixing type air conditioner regulates temperature by using an air-mixing damper to regulate the flow rate of an air flow to be reheated by the heater core in the air flow cooled at the evaporator and by mixing the air flow that is reheated at the heater core and the air flow that bypasses the heater core at a downstream air-mixing area.

In many cases, the air-mixing damper is supported between the evaporator and the heater core such that a rotary shaft thereof is rotatable near one end of the heater core and such that the degrees of opening of an air inlet channel to the heater core and an inlet channel to the bypass channel can be regulated. A gate-type planar damper is used as such an air-mixing damper.
To reduce the size of the air-mixing type vehicle air conditioner and reduce the operational force of the air-mixing damper, the radius of the rotation of the air-mixing damper is minimized and a sealing portion that completely closes the air inlet channel to the heater core and the bypass channel when the tip portion of the air-mixing damper contacts the sealing portion is integrated with the casing and protrudes into the air channel.

As described above, if the sealing portion protrudes from the casing into the air channel, the channel sidewall constituting the air inlet channel of the heater core is formed of the casing sidewall that extends from the sealing portion to the other end of the heater core (for example, refer to Patent Documents 1 and 2).
In Patent Document 1, the sidewall of the air inlet channel to the heater core is formed of a sidewall that extends substantially vertically downward from the sealing portion and that is curved to protrude outward from the channel. In Patent Document 2, the sidewall of the air inlet channel to the heater core is formed of a straight vertical sidewall that extends substantially vertically downward from the sealing portion.

Patent Document 1: Japanese Unexamined Patent Application, Publication No. HEI-11-301243 (Figs. 1 and 2)
Patent Document 2: Japanese Unexamined Patent Application, Publication No. 2000-219027 (Figs. 1 to 3)

### Disclosure of Invention

However, according to Patent Document 1, the air flow stagnates at the curved portion protruding outward from the channel, and according to Patent Document 2, the air flow is separated at the straight vertical sidewall. The stagnation and separation causes the heating ability to decrease due to a decrease in the air volume. In particular, in the area below the heater core, the air volume and the air velocity are reduced, causing the air-velocity distribution of the heater core to be degraded. As a result, the heat-exchange efficiency is reduced, causing a problem of reduced heating ability. Moreover, vortexes generated by the stagnation and separation cause noise to increase. In particular, in recent vehicles, the air conditioner noise is one noticeable noise source in the vehicle interior since the engine noise and driving noise have been reduced, and thus, there is an urgent need to reduce such noise.
Document US 2007/0023181, which is considered as the closest prior art, discloses an other vehicle air conditioner of a known type.

The present invention has been conceived in light of the problems described above. Accordingly, it is an object of the present invention to provide a vehicle air conditioner that is capable of improving the heat-exchange efficiency of the heater core by improving the air inlet channel of the heater core and suppressing stagnation and separation of an air flow so as to increase the heating ability and that is capable of reducing noise.

To achieve the above-described objects, a vehicle air conditioner according to the present invention employs the features of independant claim 1.
More specifically, the vehicle air conditioner according to the present invention includes a vehicle air conditioner including an evaporator disposed in an air channel in a casing; a heater core disposed downstream of the evaporator in a heating-side air channel; a bypass channel disposed downstream of the evaporator and bypassing the heater core; and an air-mixing damper interposed between the evaporator and the heater core for regulating the flow rate of air to be flown through the heating-side air channel and air to be flown through the bypass channel, wherein a heater-core inlet channel sidewall of the casing extending from a sealing portion of the casing to an edge of the heater core is an inclined surface, the sealing portion being contacted by a tip portion of the air-mixing damper when the inlet of the heating-side air channel is completely closed, wherein the entire inclined surface is formed as a curved surface protruding toward the inlet channel of the heater core.

According to the present invention, the inlet-channel sidewall of the heater core is an inclined surface and this inclined surface is formed as a curved surface protruding toward the inlet channel of the heater core. Therefore, in the air flow guided to the heater core through the evaporator, the air flow along the inclined surface of the inlet channel of the heater core is attached to the curved surface of the inclined surface by means of the Coanda effect and is guided to the edge of the heater core without stagnation or separation, and heat exchange is carried out at the heater core. Therefore, an air flow can be guided substantially evenly on the entire surface of the heater core, and the velocity distribution of the air flow passing through the heater core can be made even. Therefore, the heat-exchange efficiency of the heater core can be improved, and the heating ability can be increased. Moreover, since stagnation and separation of the air flow at the inlet channel of the heater core can be suppressed, noise caused by vortexes due to stagnation or separation can be reduced, and the noise of the air conditioner can be reduced.

Furthermore, the vehicle air conditioner according to the present invention may be the above-described vehicle air conditioner, wherein the evaporator and the heater core are disposed parallel to each other, and the curved inclined surface is inclined from the sealing portion to the edge of the heater core with respect to a direction orthogonal to the evaporator.

According to the present invention, the evaporator and the heater core are disposed parallel to each other, and the curved inclined surface is inclined from the sealing portion to the edge of the heater core with respect to a direction orthogonal to the evaporator. Therefore, the inclined surface from the sealing portion to the edge of the heater core can be a relatively gradually inclined surface. In this way, the air flow from the sealing portion to the heater core along the inclined surface can be attached to the curved inclined surface by means of the Coanda effect and can be smoothly guided to the edge of the heater core. Accordingly, stagnation and separation of the air flow at the inlet channel of the heater core and pressure loss can be suppressed, and noise caused by such problems can be reduced. Moreover, since an air flow can be guided substantially evenly over the entire surface of the heater core and the velocity distribution of the air flow passing through the heater core can be made even, the heat-exchange efficiency of the heater core can be improved, and the heating ability can be increased.

Furthermore, the vehicle air conditioner according to the present invention may be one of the above-described vehicle air conditioners, wherein the evaporator and the heater core may be disposed substantially vertically and parallel to each other.

According to the present invention, since the evaporator and the heater core are disposed substantially vertically and parallel to each other, the air flow that horizontally passes through the evaporator flows diagonally downward toward the heater core and then flows downstream through the heater core horizontally. In this air flow, the air that flows from the sealing portion to the heater core along the inclined surface is attached to the relatively gradually inclined curved surface, is smoothly guided to the edge of the heater core, and flows through the heater core substantially horizontally. In this way, the entire air flow smoothly flows to reduce pressure loss due to the resistance of the channel, performance can be improved, and noise can be reduced.

According to the present invention, the air flow along the inclined surface of the inlet channel to the heater core is guided to the edge of the heater core while being attached to the curved inclined surface by means of the Coanda effect, the air flows into the heater core without stagnation or separation. Therefore, the air flow can be guided over the entire surface of the heater core in a substantially even manner, and the velocity distribution of the air flow passing through the heater core can be made even. Therefore, the heat-exchange efficiency of the heater core can be improved, and the heating ability can be increased. Furthermore, since stagnation and separation of an air flow at the inlet channel of the heater core can be suppressed, noise caused by vortexes due to stagnation or separation can be reduced, and noise of the air conditioner can be reduced.

### Brief Description of Drawings

[FIG. 1] Fig. 1 is a cross-sectional view of the structure of a vehicle air conditioner according to a first embodiment of the present invention.
[FIG. 2] Fig. 2 is an analysis diagram of the state of an air flow in a heater core section of the vehicle air conditioner according to the first embodiment of the present invention.

### Explanation of Reference Signs:

1: vehicle air conditioner
2: casing
2A: heater-core inlet-channel sidewall
3: air channel
4: evaporator
5: heater core
6: air-mixing damper
6B: planar damper portion
6C: tip portion
11: sealing portion
13: heating-side air channel
14: bypass channel
30: inclined surface

### Best Mode for Carrying Out the Invention

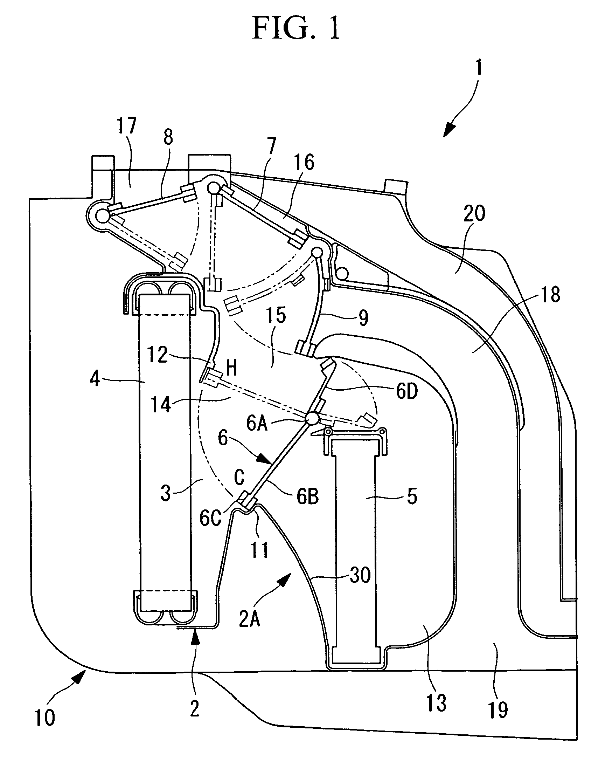

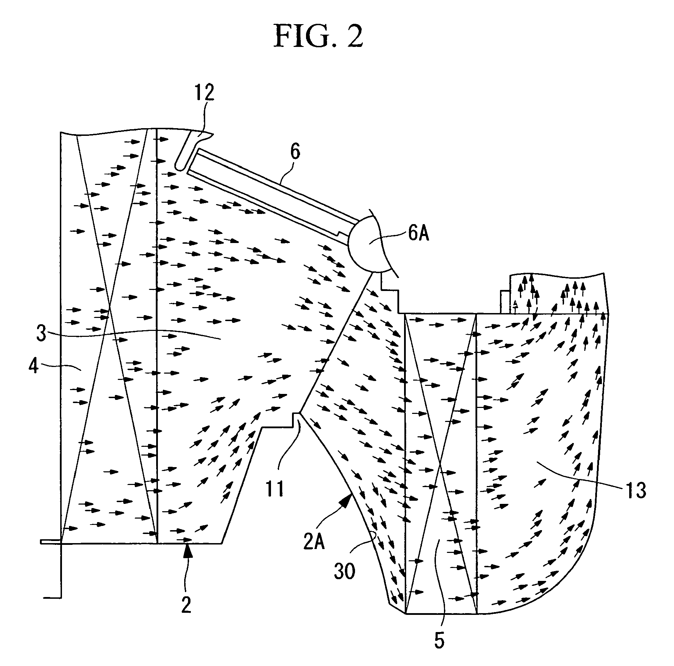

An embodiment of the present invention will be described below with reference to the drawings.
An embodiment of the present invention will be described below with reference to Figs. 1 and 2.
Fig. 1 is a cross-sectional view of the structure of a vehicle air conditioner according to an embodiment of the present invention. A vehicle air conditioner 1 includes a resin casing 2 that is connected to a blower unit which is not shown in the drawings. An air channel 3 that guides an air flow from the blower unit is provided inside the casing 2. The casing 2 is provided as a plurality of separate pieces. Air conditioner components, such as an evaporator 4, a heater core 5, an air-mixing damper 6, and a plurality of blowing-mode switching dampers 7, 8, and 9, are provided inside the casing 2 and are assembled as a single unit to form an HVAC unit 10.

At the downstream side of the evaporator 4, the air channel 3 is throttled by upper and lower sealing portions 11 and 12 contacted by the air-mixing damper 6. Then, the air channel 3 is separated into two channels: a heating-side air channel 13 in which the heater core 5 is disposed and a bypass channel 14 that bypasses the heater core 5. The heating-side air channel 13 extends upward from the downstream side of the heater core 5, passes above the heater core 5, and merges with the bypass channel 14 in an air-mixing area 15. The air channel 3 connects to a face outlet 16 and a defrost outlet 17 at the downstream side of the air-mixing area 15, to a foot outlet 19 via a foot channel 18, and to a rear-seat outlet, not shown in the drawing, via a rear-seat duct 20.

The evaporator 4 constitutes a known refrigeration cycle, together with a compressor, a condenser, an expansion valve, and so on, which are not shown in the drawings. The evaporator 4 exchanges heat between a refrigerant circulated in the refrigeration circuit and air sent from a blower unit, which is not shown in the drawings, so as to cool the air by vaporizing the refrigerant. The evaporator 4 is formed of a laminated tube-fin heat exchanger having a rectangular external shape with a predetermined thickness. The evaporator 4 is vertically disposed in the HVAC unit 10 in the area at the most upstream side of the air channel 3 such that the evaporator 4 intersects the air channel 3.

Warm water from a vehicle engine, not shown in the drawings, is circulated through a cooling water circuit and then through the heater core 5. The heater core 5 is disposed in the heating-side air channel 13 and exchanges heat between the warm water and the air cooled at the evaporator 4 to heat the air. The heater core 5 is formed of a laminated tube-fin type heat exchanger having a rectangular external shape with a predetermined thickness. The heater core 5 is disposed vertically and substantially parallel to the evaporator 4 such that the heater core 5 intersects the heating-side air channel 13.

The air-mixing damper 6 is interposed between the evaporator 4 and the heater core 5, and a rotary shaft 6A is disposed near the upper edge of the heater core 5 such that the air-mixing damper 6 is installed in the casing 2 in such a manner as to be capable of rotation. The air-mixing damper 6 is a butterfly-shaped damper. A planar damper portion 6B is movable and adjusted to an arbitrary position between a maximum cooling position (max cool position) C where the tip portion 6C contacts the sealing portion 11 to completely close the inlet of the heating-side air channel 13 and a maximum heating position (max hot position) H where the tip portion 6C contacts the sealing portion 12 to completely close the inlet of the bypass channel 14. A planar damper portion 6D is rotated together with the planar damper portion 6B to adjust the degree of opening of the outlet of the heating-side air channel 13. The planar damper portion 6D closes the outlet of the heating-side air channel 13 when the air-mixing damper 6 is at the maximum cooling position C.

Among the blowing-mode switching dampers 7, 8, and 9, the face damper 7 is attached to a face outlet 16 in such a manner as to be capable of rotation; the defrost damper 8 is attached to the defrost outlet 17 in such a manner as to be capable of rotation; and the foot damper 9 is attached to the foot channel 18 in such a manner as to be capable of rotation. The blowing-mode switching dampers 7, 8, and 9 can open and close the outlets by moving in conjunction with each other and can be switched between modes such as a face mode in which the face damper 7 is opened, a defrost mode in which the defrost damper 8 is opened, a foot mode in which the foot damper 9 is opened, a defrost foot mode in which both the defrost damper 8 and the foot damper 9 are opened, and a bi-level mode in which both the face damper 7 and the foot damper 9 are opened. The rear-seat duct 20 adjoins the face outlet 16, and an inlet is connected longitudinally (front to rear direction of the vehicle) so as to guide cooled or heated conditioned air to the rear seats.

In the vehicle air conditioner 1 having the above-described structure, the evaporator 4 and the heater core 5 are disposed in the air channel 3 and the heating-side air channel 13 such that they are substantially orthogonal to the air flow direction, disposed substantially vertically, and disposed parallel to each other. The air-mixing damper 6 for regulating the flow rate of air flowing through the heating-side air channel 13 and the bypass channel 14 is interposed between the evaporator 4 and the heater core 5. The sealing portion 11 where the tip portion 6C of the planar damper portion 6B contacts when the air-mixing damper 6 is at the maximum cooling position C is formed as an integral member of the casing 2.

A heater-core inlet channel sidewall 2A of the casing 2 that forms the heating-side air channel 13 from the above-described sealing portion 11 to the installation position of the heater core 5 is an inclined surface 30 that is inclined downward toward the lower edge of the heater core 5. The entire inclined surface 30 is formed on a protruding curved surface on the inlet-channel side of the heater core 5.

The above-described embodiment has the following advantages.
The air flow from the blower unit, not shown in the drawings, to the air channel 3 of the HVAC unit 10 is cooled by exchanging heat with the refrigerant while passing through the evaporator 4. Then, the air is flown through the heating-side air channel 13 and the bypass channel 14 according to the flow rate regulated by the air-mixing damper 6. The air flow through the heating-side air channel 13 is heated at the heater core 5 by exchanging heat with the heated water. Then, the air is mixed with the cooled air from the bypass channel 14 at the air-mixing area 15 to be set to a predetermined temperature. Then, the air is blown into the vehicle interior through the outlets 16, 17, and 19 and the rear-seat outlet, not shown in the drawings, in accordance with the blowing mode set by switching the blowing-mode switching dampers 7, 8, and 9.

During this time, the air flow guided by the air-mixing damper 6 from the air channel 3 to the heater core 5 via the heating-side air channel 13 is throttled by the sealing portions 11 and 12 and, then, as shown in Fig. 2, is guided diagonally downward to the heater core 5. Here, the air flowing along the inclined surface 30 of the heater-core inlet channel sidewall 2A is attached to the curved surface of the inclined surface 30 by means of the Coanda effect and is guided to the lower edge of the heater core 5 without stagnation or separation.

Fig. 2 illustrates a state of maximum heating (max hot) in which the air-mixing damper 6 completely closes the bypass channel 14. When the air-mixing damper 6 is positioned somewhere between the maximum heating position (max hot position) H and the maximum cooling position (max cool position) C, similar to the above-described case, the air flow toward the heater core 5 is smoothly guided to the lower edge of the heater core 5 by being attached to the curved surface of the inclined surface 30 by means of the Coanda effect, and the air flows into the heater core 5.

As described above, the evaporator 4 and the heater core 5 are disposed parallel to each other, and the curved inclined surface 30 is an inclined surface that is relatively gradually inclined from the sealing portion 11 to the lower edge of the heater core 5 with respect to a direction orthogonal to the evaporator 4. Therefore, the air flow along the inclined surface 30 from the sealing portion 11 to the heater core 5 can be smoothly guided to the lower edge of the heater core 5 by being attached to the air flow to the curved surface of the inclined surface 30 by the Coanda effect.

Therefore, the air flow can be guided substantially evenly over the entire surface of the heater core 5, and the velocity distribution of the air flow that passes through the heater core 5 can be made substantially even. Thus, the heat-exchange efficiency of the heater core 5 can be improved, and the heating ability can be improved. Furthermore, stagnation or separation of the air flow in the heater-core inlet channel and pressure loss can be suppressed, and noise can be reduced by reducing noise caused by such problems.

Since the evaporator 4 and the heater core 5 are disposed substantially vertically and parallel to each other, as shown in Fig. 2, the air flow guided substantially horizontally through the evaporator 4 is guided downward through the heating-side air channel 13 toward the heater core 5, passes through the heater core 5 in a substantially horizontal direction, and is guided downstream. In this air flow, the air that flows from the sealing portion 11 to the heater core 5 along the inclined surface 30 is smoothly guided to the lower edge of the heater core 5 by being attached to the curved surface of the relatively gradually inclined surface 30, and then guided substantially horizontally to the heater core 5. In this way, the entire air flow can be smoothly guided, the pressure loss due to the resistance of the channel can be reduced, performance can be improved, and noise can be reduced.

The present invention is not limited to the above-described embodiment, and modifications are possible within the scope of the invention as defined by the claims.
For example, the evaporator 4 and the heater core 5 do not necessarily have to be disposed parallel to the vertical direction and may be disposed at an angle or horizontally. The air-mixing damper 6 does not have to be butterfly-shaped; it may include only the planar damper portion 6B.

## Claims

1. A vehicle air conditioner comprising:
an evaporator (4) disposed in an air channel (3) in a casing (2);
a heater core (5) disposed downstream of the evaporator (4) in a heating-side air channel (13);
a bypass channel (14) disposed downstream of the evaporator (4) and bypassing the heater core (5); and
an air-mixing damper (6) interposed between the evaporator (4) and the heater core (5) for regulating the flow rate of air to be flown through the heating-side air channel (13) and air to be flown through the bypass channel (14),
a heater-core inlet channel sidewall (2A) of the casing (2), extending from a sealing portion (11) of the casing (2) to an edge of the heater core (5), is an inclined surface (30), the sealing portion (11) being contacted by a tip portion (6C) of the air-mixing damper (6) when the inlet of the heating-side air channel (13) is completely closed, **characterized**
**in that** the entire inclined surface (30) is formed as a curved surface protruding toward the inlet channel of the heater core (5),
**in that** a protruding portion is formed at the upstream side of the sealing portion (11) of the casing (2),
**in that** a height of the protruding portion from said edge of the heater core (5) is less or equal to a height of the sealing portion (11) from said edge of the heater core (5), and
**in that** a tip of the protruding portion is formed as a round shape.

2. The vehicle air conditioner according to Claim 1, wherein the evaporator (4) and the heater core (5) are disposed parallel to each other, and the curved inclined surface (30) is inclined from the sealing portion (11) to the edge of the heater core with respect to a direction orthogonal to the evaporator (4).

3. The vehicle air conditioner according to Claim 1 wherein the curved inclined surface (30) is gradually inclined from the sealing portion (11) to the edge of the heater core (5) with respect to a direction orthogonal to the evaporator (4).

4. The vehicle air conditioner according to any of Claims 1 to 3, wherein the evaporator (4) and the heater core (5) are disposed substantially vertically and parallel to each other.

## Patentansprüche

1. Fahrzeugklimaanlage, umfassend:
einen Verdampfer (4), der in einem Luftkanal (3) in einem Gehäuse (2) angeordnet ist,
einen Heizkörper (5), der stromabwärts des Verdampfers (4) in einem heizseitigen Luftkanal (13) angeordnet ist,
einen Umgehungskanal (14), der stromabwärts des Verdampfers (4) angeordnet ist und den Heizkörper (5) umgeht, und
eine Luftmischklappe (6), die zwischen dem Verdampfer (4) und dem Heizkörper (5) zum Regulieren der Flußrate der Luft, die durch den heizseitigen Luftkanal (13) fließen soll, und der Luft, die durch den Umgehungskanal (14) fließen soll, eingefügt ist,
eine Heizkörpereinlaßkanalseitenwand (2A) des Gehäuses (2), die sich von einem Dichtungsabschnitt (11) des Gehäuses (2) zu einer Kante des Heizkörpers (5) erstreckt und die eine geneigte Oberfläche (30) ist, wobei der Dichtungsabschnitt (11) durch einen Spitzenabschnitt (6C) der Luftmischklappe (6) berührt wird, wenn der Einlaß des Heizseitenluftkanals (13) vollständig geschlossen ist, **dadurch gekennzeichnet,**
**daß** die gesamte geneigte Oberfläche (30) als eine gebogene Oberfläche ausgebildet ist, die in Richtung des Einlaßkanals des Heizkörpers (5) vorspringt,
**daß** ein vorspringender Abschnitt an der stromaufwärts gelegenen Seite des Dichtungsabschnittes (11) des Gehäuses (2) ausgebildet ist,
**daß** eine Höhe des vorspringenden Abschnittes von der Kante des Heizkörpers (5) kleiner als eine oder gleich einer Höhe des Dichtungsabschnittes (11) von der Kante des Heizkörpers (5) ist, und
**daß** eine Spitze des vorspringenden Abschnittes als eine runde Form ausgebildet ist.

2. Fahrzeugklimaanlage nach Anspruch 1, wobei der Verdampfer (4) und der Heizkörper (5) parallel zueinander angeordnet sind, und die gebogene geneigte Oberfläche (30) von dem Dichtungsabschnitt (11) zur Kante des Heizkörpers in Bezug auf eine Richtung, die orthogonal zum Verdampfer (4) ist, geneigt ist.

3. Fahrzeugklimaanlage nach Anspruch 1, wobei die gebogene geneigte Oberfläche (30) von dem Dichtungsabschnitt (11) zur Kante des Heizkörpers (5) in Bezug auf eine Richtung, die orthogonal zum Verdampfer (4) ist, graduell geneigt ist.

4. Fahrzeugklimaanlage nach einem der Ansprüche 1 bis 3, wobei der Verdampfer (4) und der Heizkörper (5) im wesentlichen vertikal und parallel zueinander angeordnet sind.

## Revendications

1. Climatiseur d'air pour véhicule comprenant:
un évaporateur (4) disposé dans un canal d'air (3) dans un carter (2);
un radiateur de chauffage (5) disposé en aval de l'évaporateur (4) dans un canal d'air du côté chauffant (13);
un canal de dérivation (14) disposé en aval de l'évaporateur (4) et contournant le radiateur de chauffage (5); et
un volet de mélange d'air (6) interposé entre l'évaporateur (4) et le radiateur de chauffage (5) pour réguler le débit d'air destiné à s'écouler par le canal d'air du côté chauffant (13) et l'air destiné à s'écouler par le canal de dérivation (14),
une paroi latérale (2A) de canal d'entrée du radiateur de chauffage du carter (2), s'étendant à partir d'une partie d'étanchéité (11) du carter (2) vers un bord du radiateur de chauffage (5), est une surface inclinée (30), la partie d'étanchéité (11) étant en contact avec une partie d'extrémité (6C) du volet de mélange d'air (6) lorsque l'entrée du canal d'air du côté chauffant (13) est complètement fermée, **caractérisé en ce que**:
toute la surface inclinée (30) est formée comme une surface incurvée faisant saillie vers le canal d'entrée du radiateur de chauffage (5),
**en ce qu'**une partie en saillie est formée du côté amont de la partie d'étanchéité (11) du carter (2),
**en ce qu'**une hauteur de la partie en saillie à partir dudit bord du radiateur de chauffage (5) est inférieure ou égale à une hauteur de la partie d'étanchéité (11) à partir dudit bord du radiateur de chauffage (5), et
**en ce qu'**une extrémité de la partie en saillie est formée comme une forme ronde.

2. Climatiseur d'air pour véhicule selon la revendication 1, dans lequel l'évaporateur (4) et le radiateur de chauffage (5) sont disposés parallèlement entre eux, et la surface inclinée incurvée (30) est inclinée à partir de la partie d'étanchéité (11) vers le bord du radiateur de chauffage par rapport à une direction orthogonale à l'évaporateur (4).

3. Climatiseur d'air pour véhicule selon la revendication 1, dans lequel la surface inclinée incurvée (30) est progressivement inclinée à partir de la partie d'étanchéité (11) jusqu'au bord du radiateur de chauffage (5) par rapport à une direction orthogonale à l'évaporateur (4).

4. Climatiseur d'air pour véhicule selon l'une quelconque des revendications 1 à 3, dans lequel l'évaporateur (4) et le radiateur de chauffage (5) sont disposés de manière sensiblement verticale et parallèle entre eux.
